# EUROPÄISCHE PATENTSCHRIFT

(11) **EP 0 779 023 B1**
(45) Veröffentlichungstag und Bekanntmachung des Hinweises auf die Patenterteilung: **29.12.1999**
(21) Anmeldenummer: 96119338.0
(22) Anmeldetag: 03.12.1996
(51) Int. Cl.: A01D 80/02

(54) **Zinkenbefestigung für Heuwerbungsmaschinen**
Tooth attachment for haymaking machine
Fixation de dents pour machine de fenaison

(30) Priorität: 15.12.1995 DE 29519638 U
(43) Veröffentlichungstag der Anmeldung: 18.06.1997
(73) Patentinhaber: NIEMEYER Landmaschinen GmbH, 48477 Hörstel-Riesenbeck (DE)
(72) Erfinder: Ungruh, Josef, 48429 Rheine (DE)

(56) Entgegenhaltungen:
- EP-A- 0 278 101
- EP-A- 0 616 761
- DE-C- 3 938 821

## Beschreibung

Die Erfindung betrifft eine Zinkenbefestigung für Heuwerbungsmaschinen gemäß dem Oberbegriff des Anspruchs 1.

In der DE 39 38 821 C1 wird für derartige Maschinen eine Zinkenbefestigung für U-förmige Doppelfederzinken vorgeschlagen, bei der der Befestigungsbolzen für den U-förmigen Doppelfederzinken von seiner Formgebung her derart gestaltet ist, daß das Klemmteil und der Befestigungsbolzen ein Stück bilden und die einen Anschlag aufnehmende Bohrung innerhalb des Klemmteils des Befestigungsbolzens annähernd quer zur längsten Achse des Befestigungsbolzens ausgerichtet ist. Hierdurch soll die Befestigung des Zinkens mit einer Winkelverstellung kombiniert werden. Wegen des hohen Bedienungsaufwandes und der Gefahr der selbsttätigen Winkelverstellung ist eine derartige Befestigungsart in vielen Fällen nicht erwünscht.

Aufgabe der Erfindung ist es, eine Zinkenbefestigung für Doppelfederzinken von Heuwerbungsmaschinen zu schaffen, die mit einfachen Mitteln die Zinkenführung und Halterung von Doppelfederzinken mit ihrem Tragarm frei umgreifenden Bindungsteilen verbessert und dadurch die Lebensdauer der Doppelfederzinken erhöht.

Die Erfindung löst die Aufgabe für U-förmige Doppelfederzinken der eingangs genannten Art durch die Merkmale im kennzeichnenden Teil des Anspruchs 1. Hinsichtlich weiterer wesentlicher Ausgestaltungen der Erfindung wird auf die Ansprüche 2 bis 5 verwiesen.

Die Doppelfederzinken sind als zwei Schenkelfedern gewickelt und durch ein U-förmiges Verbindungsteil fest miteinander verbunden. Die Enden der verlängerten der Schenkelfedern bilden die wirksamen Zinken, die am Ende eines rohrförmigen Tragarms befestigt sind. Mehrere Tragarme mit Doppelfederzinken bilden einen Zinkenkreisel, der rotierend angetrieben ist. Die Zinken bearbeiten das am Boden liegende Mähgut. Die Federcharakteristik der Schenkelfedern und die Befestigungsart am Tragrohr sind wesentlich für die Lebensdauer der Doppelfederzinken, die neben den Belastungen durch die Bearbeitung des Mähgutes, Stöße oder bei Bodenberührung hohe zusätzliche Belastungen aufnehmen und in den Tragarm einleiten müssen. Hierbei kommt dem Zwischenstück, das die Verbindung zwischen Doppelfederzinken und Tragrohr herstellt eine besondere Bedeutung zu.

Nach der Erfindung umfaßt das Zwischenstück in vorteilhafter Weise einen Führungsteil, der den Verbindungsteil und benachbarte Bereiche der Windungsteile der Doppelschenkelfeder untergreift und im Eingriffsbereich radial führt, wobei der Führungsteil den Verbindungsteil innen- und begrenzt außenseitig abstützt. Hierdurch werden die auftretenden Kräfte besonders schonend in den Tragarm eingeleitet. Der U-förmige Verbindungsteil bildet für die im wesentlichen einseitig beaufschlagten Doppelfederzinken den Anschlag an die das Zwischenstück und den Tragarm durchgreifende Verbindungsschraube. Der Windungsdurchmesser des Doppelfederzinkens ist wesentlich größer als der Durchmesser des Tragarms, so daß auch bei extremen Belastungen genügend Raum für die Verformung der Windungen zur Verfügung steht.

Für die Einleitung der auftretenden Kräfte in den Tragarm ist es von Vorteil, daß die Schraube den Verbindungsteil des Doppelfederzinkens zwischen den Führungsbereichen des zu einer Radialebene symmetrischen Zwischenteils festlegt.

Zur Einleitung der Kräfte in den Tragarm weist der Führungsteil des Zwischenstücks innen- und außenseitig zylindrische Führungsflächen auf, die die Mittelachse des Tragarms in einem Zentriwinkelbereich von vorzugsweise 130° umgibt. Hierdurch wird in vorteilhafter Weise die Flächenpressung, sowohl zwischen Tragarm und Führungsteil, als auch zwischen Zwischenstück und den Windungen des Doppelfederzinkens, gering gehalten.

Um den Stoßbelastungen gewachsen zu sein, muß das Zwischenstück eine hohe Dehnfähigkeit aufweisen. Die Auswahl eines geeigneten Werkstoffes ist deshalb von besonderer Bedeutung. Da das Zwischenstück nach der Erfindung vorzugsweise als Guß- oder Schmiedeteil ausgebildet ist, steht eine Auswahl geeigneter Werkstoffe zur Verfügung.

Weitere Merkmale und Vorteile der Erfindung ergeben sich aus der nachfolgenden Beschreibung und den Zeichnungen, in denen ein Ausführungsbeispiel einer Zinkenbefestigung für Heuwerbungsmaschinen nach der Erfindung schematisch, angenähert maßstäblich dargestellt ist.

Es zeigt:
- Fig. 1: - Einen am Tragarm einer Heuwerbungsmaschine befestigten Doppelfederzinken.
- Fig. 2: - Eine Detailansicht in Richtung A gemäß Fig. 1.
- Fig. 3: - Schnitt B-B gemäß Fig. 1.

Der Tragarm (1) bildet einen Teil von Zinkenkreiseln an Heuwerbungsmaschinen. Er trägt Doppelfederzinken (2), die durch eine Verbindungsschraube (4), mit Scheibe (5), Distanzstück (6) und Zwischenstück (8) mit ihm verbunden sind. Auf die Darstellung von für die Erfindung unwesentlichen Details ist verzichtet worden.

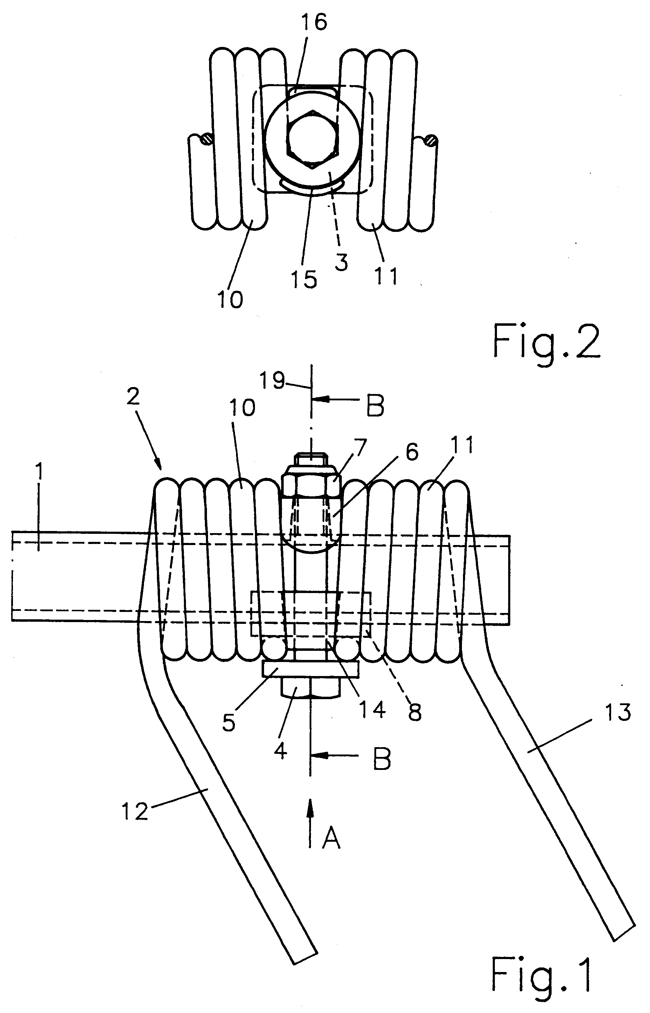

Das U-förmig geformte Verbindungsteil (3) stellt die Verbindung zwischen den Windungsteilen (10,11) des Doppelfederzinkens (2) her. An den Enden der Windungsteile (10,11) bilden die runden Zinken (12,13) die Arbeitswerkzeuge, die in verkürzter Form dargestellt sind (Fig. 1).

Die Befestigung am Tragarm (1) erfolgt im Bereich des Verbindungsteils (3), indem die Verbindungsschraube (4) das U-förmige Verbindungsteil (3) durchgreift und die Scheibe (5) auf den inneren Windungsteilen (10,11) und dem Verbindungsteil (3) außen anliegt. Das Zwischenstück (8) ist zwischen den Windungsteilen (10,11) und dem Tragarm (1) angeordnet und übernimmt die Führung des Doppelfederzinkens (2) und die Übertragung der Anpreßkräfte durch die Verbindungsschraube (4) in den Tragarm (1). Auf der Gegenseite des Tragarms (1) ist ein Distanzstück (6) angeordnet, auf das die Sechskantmutter (7) aufliegt. Die Verbindungsschraube (4) durchgreift den Tragarm (1) durch eine zur Tragarmachse symmetrisch angeordnete Bohrung. Durch das Anziehen der Sechskantmutter (7) werden durch die Scheibe (5) die Windungsteile (10,11) über das Zwischenstück (8) an den Tragarm (1) gepreßt.

Das Zwischenstück (8) führt den Doppelfederzinken (2) in einem Führungsteil (9), das im wesentlichen aus einer inneren Führung (14) und einer äußeren Führung (15) besteht, die die Begrenzung des Verbindungsteils (3) in radialer Richtung übernimmt (Fig. 2). Eine seitliche Führung (16) übernimmt die Verdrehsicherung des Doppelfederzinkens (2) um die Achse der Verbindungsschraube (4).

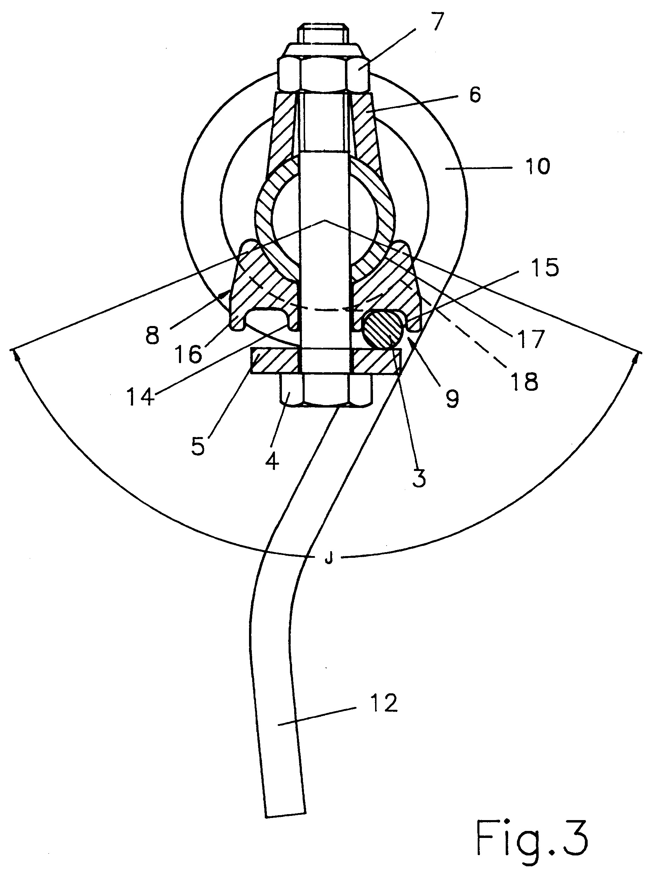

Der Führungsteil (9) des Zwischenstücks (8) weist innen- und außenseitig zylindrische Führungsflächen (17,18) auf, die die Mittelachse des Tragarms (1) in einem Zentriwinkelbereich (α) umgibt. Die innere Führungsfläche (17) liegt am Tragarm (1) an während die äußere Führungsfläche (18) jeweils mit den ersten Windungen der Windungsteile (10,11) neben dem U-förmigen Verbindungsteil (3) in Verbindung steht (Fig. 3). Das Zwischenstück (8) ist zu einer Radialebene (19) symmetrisch festgelegt.

## Patentansprüche

1. Zinkenbefestigung für Doppelfedersinken von Heuwerbungsmaschinen, die zwei untereinander durch ein U-förmiges Verbindungsteil (3) verbundene, einen Tragarm (1) der Heuwerbungsmaschine umgreifende Windungsteile (10,11) aufweisen und mittels einer den Tragarm (1) radial durchgreifenden Verbindungsschraube (4) auf dem Tragarm (1) und einem Zwischenstück festgelegt sind, dadurch gekennzeichnet, daß das Zwischenstück (8) einen Führungsteil (9) umfaßt, der den Verbindungsteil (3) und benachbarte Bereiche der Windungsteile (10,11) untergreift und im Eingriffsbereich radial führt, wobei der Führungsteil (9) den Verbindungsteil (3) innen- und begrenzt außenseitig abstützt.

2. Zinkenbefestigung nach Anspruch 1, dadurch gekennzeichnet, daß der Führungsteil (9) jeweils mindestens die erste Windung der dem Verbindungsteil (3) benachbarten Windungsteile (10,11) abstützt.

3. Zinkenbefestigung nach einem der Ansprüche 1 oder 2, dadurch gekennzeichnet, daß die Verbindungsschraube (4) den Verbindungsteil (3) des Doppelfederzinkens (2) zwischen den Führungsbereichen (9) des zu einer Radialebene (19) symmetrischen Zwischenstücks (8) festlegt.

4. Zinkenbefestigung nach einem der Ansprüche 1 bis 3, dadurch gekennzeichnet, daß der Führungsteil (9) des Zwischenstücks (8) innen- und außenseitig zylindrische Führungsflächen (17,18) aufweist, die die Mittelachse des Tragarms (1) in einem Zentriwinkelbereich (α) von 100° bis 150°, vorzugsweise 130°, umgibt.

5. Zinkenbefestigung nach einem der Ansprüche 1 bis 4, dadurch gekennzeichnet, daß das Zwischenstück (8) eine hohe Dehnfähigkeit aufweist.

## Claims

1. Tine fastening method for double spring tines of haymaking machinery, comprising of two wound sections (10, 11) connected to each other by a U-shaped connecting element (3) embracing a carrier arm (1) of the haymaking machine and affixed on the carrier arm (1) and on an intermediate piece by means of a connecting screw (4) radially extending through the carrier arm (1), **characterised in that** the intermediate piece (8) includes a guide element (9), reaching under the connecting element (3) and neighbouring areas of the wound sections (10,11) and guides radially in the guide element (9), the guide element (9) supports the connecting element (3) inside and, to a limited degree, on the outside.

2. Tine fastening method according to claim 1, **characterised in that** the guide element (9) supports at least each the first winding of the neighbouring wound sections (10,11) of the connecting element (3).

3. Tine fastening method according one of claims 1 or 2, **characterised in that** the connecting screw (4) fixes the connecting element (3) of the double spring tine (2) between the guide areas (9) of the intermediate piece (8) being symmetrical in relation to a radial level (19).

4. Tine fastening method according to one of the claims 1 to 3, **characterised in that** the guide element (9) of the intermediate piece (8) has cylindrical guide surfaces (17,18) on the inside and outside which surround the centre axis of carrier arm (1) in a central angle range (α) from 100° to 150°, preferably 130°.

5. Tine fastening method according to one of claims 1 to 4, **characterised in that** the intermediate piece (8) is of a high degree of tractibility.

## Revendications

1. Fixation de dents pour les doubles dents élastiques de machines pour récolter le foin, comprenant deux parties d' enroulement (10,11) reliées l' une à l'autre par une pièce de liaison (3) en forme de U, entourant un bras de support (1) de la machine et fixées sur le bras de support (1) à l'aide d'une pièce intermédiaire et d'une vis de liaison (4) traversant radialement le bras de support (1), caractérisée en ce que la pièce intermédiaire (8) comprend une pièce de guidage (9) qui vient sous la partie de liaison (3) et les zones voisines des parties d'enroulement (10,11), et les guide radialement dans la zone de prise, la partie de guidage (9) soutenant inérieurement, et de manière limitée extérieurement, la partie de liaison (3).

2. Fixation de dents selon la revendication 1, caractérisée en ce que la partie de guidage (9) soutient chaque fois au moins la première spire des parties d'enroulement (10,11) voisines de la partie de liaison (3).

3. Fixation de dents selon l'une des revendications 1 ou 2, caractérisée en ce que la vis de liaison (4) fixe la partie de liaison (3) de la double dent à ressort (2) entre les zones de guidage (9) de la pièce intermédiaire (8), symétrique par rapport à un plan radial (19).

4. Fixation de dents selon l'une des revendications 1 à 3, caractérisée en ce que la partie de guidage (9) de la pièce intermédiaire (8) comporte intérieurement et extérieurement des surfaces de guidage (17,18) cylindriques qui entourent l'axe central du bras de support (1) dans une zone d'angle au centre (α) compris entre 100° et 150°, de préférence 130°.

5. Fixation de dents selon l'une des revendications 1 à 4, caractérisée en ce que la pièce intermédiaire (8) présente une forte caractéristique de dilatation.
